# EUROPÄISCHE PATENTANMELDUNG

(11) **EP 1 647 918 A1**
(43) Veröffentlichungstag der Anmeldung: **19.04.2006**
(21) Anmeldenummer: 04024353.7
(22) Anmeldetag: 13.10.2004
(51) Int. Cl.: G06K 9/00, G07C 9/00

(54) **Zugangskontrollsystem**

(71) Anmelder: SkiData AG, 5083 Gartenau (AT)
(72) Erfinder: Wallerstorfer, Kurt, A-5204 (AT)
(74) Vertreter: Haft, von Puttkamer, Berngruber, Czybulka

(57) **Zusammenfassung**

Ein System mit wenigstens einer Zugangskontrollvorrichtung (1) weist einen Zugangsberechtigungsleser (4) für Datenträger (8), die mit einer Zugangsberechtigung und Identifikationsdaten versehen sind, eine Datenbank (9) und eine Kamera (7) auf. In der Datenbank werden bei gültiger Lesung einer Zugangsberechtigung die Identifkationsdaten des betreffenden Datenträgers (8) und ein von der Kamera (7) aufgenommenes digitalisiertes Bild des Benutzers abgespeichert. Das abgespeicherte Bild des Benutzers des betreffenden Datenträgers ist von der Datenbank (9) an Endgeräte (11 bis 13) übertragbar, um es mit einem zuvor aufgenommenen, in der Datenbank (9) abgespeicherten Bild des Benutzers zu vergleichen. Bei fehlender Übereinstimmung der Benutzerbilder wird dem betreffenden Datenträger (8) der weitere Zugang verweigert.

## Beschreibung

Die Erfindung bezieht sich auf ein System mit wenigstens einer Zugangskontrollvorrichtung mit einem Zugangsberechtigungsleser für Datenträger nach dem Oberbegriff des Anspruchs 1.

Systeme zur Zugangskontrolle werden beispielsweise bei Seilbahnen und Liften verwendet. Insbesondere zum Wintersport werden neben Einzelfahrten Tageskarten, Wochenkarten und Saisonkarten und dergleichen längerfristige Berechtigungen ausgegeben, oft für ganze Regionen mit einer Vielzahl von Seilbahnen und Liften. Für die längerfristigen Berechtigungen werden dabei gegenüber Einzelfahrten erhebliche Preisnachlässe gewährt, sie sind dafür jedoch nicht auf andere Personen übertragbar.

Die unberechtigte Übertragung längerfristiger Karten ist jedoch weit verbreitet. So kommt es häufig vor, dass ein Skifahrer, der frühmorgens eine Tageskarte gekauft hat, das Skifahren gegen Mittag einstellt und dann die Karte beispielsweise einem Bekannten gibt, gegebenenfalls auch einer fremden Person, z. B. am Parkplatz. Dadurch entsteht den Liftbetreibern ein erheblicher finanzieller Schaden. Um die Übertragung zu verhindern, wird daher beim Kauf der Karte ein Identitätsfoto des Käufers angefertigt, das auf der gekauften Karte angebracht wird, sodass das Kontrollpersonal das Foto auf der Karte mit der Person vergleichen kann, die den Zugang benutzt. Das Anfertigen und Aufbringen der Fotos auf den Karten ist jedoch zeitaufwändig und kostspielig, sodass damit nur Karten hoher Wertigkeiten, wie Wochen- oder Saisonkarten gesichert werden können.

Ferner ist es bekannt, ein digitalisiertes Bildes des Kartenkäufers zusammen mit Identifikationsdaten für die betreffende Karte in einer Datenbank abzuspeichern und am Zugang ein Endgerät mit einem Bildschirm vorzusehen, auf das nach Eingabe der Identifikationsdaten der Karte durch das Kontrollpersonal das Bild des Karteninhabers von der Datenbank auf das Endgerät übertragen und mit dem Bildschirm dargestellt wird, also die Kontrollperson den Zugangsbenutzer mit dem Bild auf dem Bildschirm vergleichen kann. Dieser Überprüfungsvorgang ist jedoch zeitaufwändig und wird von berechtigten Karteninhabern als starke Belästigung empfunden, sodass man diese Kontrolle nur in Ausnahmefällen durchführen kann.

Eine automatische Gesichtserkennung durch Bildverarbeitung ist für Zugangskontrollanlagen kaum anwendbar, schon gar nicht beim Wintersport aufgrund der Mützen, Stirnbänder, Ski- und Sonnenbrillen, Schals und dergleichen Gegenstände, die das Gesicht verdecken.

Aufgabe der Erfindung ist es, ein einfaches effektives System zur Kontrolle nicht übertragbarer Zugangsberechtigungsdatenträger ohne Belästigung der Zugangsbenutzer bereitzustellen.

Dies wird erfindungsgemäß mit dem in Anspruch 1 gekennzeichneten System erreicht. In den Unteransprüchen sind vorteilhafte Ausgestaltungen der Erfindung wiedergegeben.

Das erfindungsgemäße System weist eine oder mehrere Zugangskontrollvorrichtungen auf. Dabei kann es sich um beliebige Personenvereinzelungseinrichtungen handeln, beispielsweise Drehsperren, Lichtschranken und dergleichen. An der bzw. jeder Zugangskontrollvorrichtung befindet sich ein Zugangsberechtigungsleser, der bei gültiger Lesung einer Zugangsberechtigung auf dem Datenträger den Zugang freigibt, d. h. z. B. bei einer von einem Motor angetriebenen Drehsperre den Motor ansteuert, sodass der Benutzer des Datenträgers die Drehsperre passieren kann. Der Zugangsberechtigungsleser kann eine kontaktbehaftete Leseeinrichtung, beispielsweise für Barcode-, Magnet- oder Chipkarten als Datenträger oder eine berührungslos wirkende Leseeinrichtung insbesondere für RFID-Transponder als Datenträger sein. Die Zugangsberechtigung kann beispielsweise an einer Kassa beim Kauf des Datenträgers auf den Datenträger aufgezeichnet oder darauf abgespeichert werden.

Der Datenträger ist mit Identifikationsdaten versehen, die ein eindeutige Referenz oder Kennung für den jeweiligen Datenträger bilden. Dabei kann es sich um visuelle Daten, beispielsweise auf das Ticket aufgedruckte alphanumerische Daten handeln. Auch können die Identifikationsdaten durch einen Barcode gebildet oder auf die Magnet- oder Chipkarte aufgezeichnet sein. Bei Karten mit einem Chip, d. h. kontaktbehafteten Chipkarten oder RFID-Transpondern können die Identifikationsdaten auch z. B. die Seriennummer des Chips sein. Die Identifikationsdaten können auch mit den Zugangsberechtigungsdaten übereinstimmen, sofern es sich bei letzteren um eine eindeutige Kennung handelt. Bei den Identifikationsdaten für den Datenträger kann es sich auch um einen Referenzcode für eine in der Datenbank abgelegte durch die Zugangskontrollvorrichtung abrufbare Zugangsberechtigung handeln.

Mit dem erfindungsgemäßen System kann der Zugang zu beliebigen Einrichtungen kontrolliert werden, beispielsweise zu Veranstaltungen, Stadien oder Schwimmbädern. Es ist jedoch insbesondere für Personenbeförderungsanlagen bestimmt, vor allem für Lifte, Seilbahnen und dergleichen Personenbeförderungseinrichtungen in einem Skigebiet. Dabei sind meistens in einer Wintersportregion eine Vielzahl von derartigen Personenbeförderungseinrichtungen mit einem Datenträger mit einer Zugangsberechtigung benutzbar. Die Zugangsberechtigungsleser der Zugangskontrollvorrichtungen an den einzelnen Liften, Bergbahnen und dergleichen Personenbeförderungseinrichtungen sind dabei mit einer zentralen Datenbank vernetzt, in der bei jedem Zugang die Identifikationsdaten des jeweiligen Datenträgers und weitere Zugangsdaten, wie der Zeitpunkt des Zugangs und die Daten zur Identifizierung der jeweiligen Zugangskontrollvorrichtung gespeichert werden.

Nach der Erfindung befindet sich am Zugang eine Kamera, mit der beim Zugang ein Bild, vorzugsweise ein Brustbild des Datenträger-Benutzers aufgenommen und in digitalisierter Form in der Datenbank abgespeichert wird.

Bei der Kamera kann es sich beispielsweise um eine einfache Webcam handeln, die z. B. in dem Gehäuse des Zugangsberechtigungslesers vorgesehen sein kann. Dazu braucht das Gehäuse nur eine kleine Öffnung für das Objektiv aufzuweisen, sodass die Kamera praktisch nicht wahrnehmbar ist. Die Kamera wird vorzugsweise durch den Zugangsberechtigungsleser ausgelöst, wenn dieser einen Datenträger liest.

Die Auslösung der Kamera und die Abspeicherung des Bildes kann bei jedem Zugang erfolgen. Vorzugsweise wird sie jedoch nur beim Zugang mit einem Datenträger höherer Wertigkeit durchgeführt, also z. B. bei Tageskarten und dergleichen Datenträgern mit längerfristiger Zugangsberechtigung, nicht jedoch bei einer Karte für eine Einzelfahrt. Auch bei längerfristigen Zugangsberechtigungen kann die Aufnahme und Abspeicherung eines Bildes des Benutzers des Datenträgers nicht bei jedem Zugang erfolgen, sondern beispielsweise nur in bestimmten Zeitintervallen, beispielsweise von mehr als einer Stunde.

Die in der Datenbank abgespeicherten Bilder und die jedem Bild zugeordneten Identifikationsdaten des jeweiligen Datenträgers und gegebenenfalls weitere Zugangsdaten, wie Zugangszeitpunkt und Daten zur Identifizierung der jeweiligen Zugangskontrollvorrichtung, sind erfindungsgemäß auf einen oder vorzugsweise mehrere Endgeräte mit Bildschirm übertragbar oder von diesen abrufbar. Die Endgeräte können dabei über das Internet mit der Datenbank kommunizieren. Das Endgerät kann insbesondere ein PC sein.

Das von der Kamera an der Zugangskontrollvorrichtung aufgenommene, in der Datenbank abgespeicherte Bild des Datenträgerbenutzers kann auf dem Bildschirm des Endgeräts bzw. PCs mit einem zuvor aufgenommenen und in der Datenbank abgespeicherten Bild des Datenträgerbenutzers von dem Bediener des PCs visuell verglichen werden. Dabei kann es sich um ein Bild handeln, das zuvor von der Kamera an der oder einer der Zugangskontrollvorrichtungen aufgenommen worden ist. Das zum Sichtvergleich verwendete Bild kann jedoch auch an einer anderen Stelle aufgenommen und dann digitalisiert in der Datenbank abgespeichert worden sein, beispielsweise an der Kassa beim Kauf des Datenträgers.

Nach der Erfindung findet also ein visueller Vergleich der Bilder des Benutzers des jeweiligen Datenträgers an einem von der Zugangskontrollvorrichtung entfernt gelegenen Ort statt. Die Zugangskontrolle mit dem erfindungsgemäßen System wird damit vom Benutzer nicht wahrgenommen, eine Belästigung des Benutzers durch die erfindungsgemäße Zugangskontrolle also ausgeschlossen.

Da die Datenbank mit mehreren Endgeräten bzw. PCs kommunizieren kann, kann eine große Anzahl von Sichtvergleichen in kurzer Zeit erfindungsgemäß durchgeführt, also die Zuverlässigkeit und Effektivität der Kontrolle wesentlich erhöht werden. Hinzu kommt, dass bei einer Kommunikation über das Internet der Sichtvergleich auch an weit entfernt liegenden Orten, beispielsweise von sogenannten "Call-Centern" in anderen Ländern durchgeführt werden kann.

Um die Anzahl der zu vergleichenden Bilder zu reduzieren, ohne die Effektivität der Kontrolle nennenswert herabzusetzen, ist vorzugsweise ein Selektionsprogramm vorgesehen, das aus den in der Datenbank abgespeicherten Benutzerbildern bestimmte Bilder zum Sichtvergleich am Bildschirm auswählt.

So können nur die Bilder der Benutzer von Datenträgern mit höherer Wertigkeit ausgewählt und zum Sichtvergleich übertragen werden, beispielsweise nur von Wochen- oder Saisonkarten.

Ferner kann anhand der in der Datenbank abgespeicherten Zugangsdaten für den jeweiligen Datenträger, also insbesondere den Zugangszeitpunkten und den jeweiligen Zugangsvorrichtungen eine Verhaltensmuster-Analyse des Benutzers durchgeführt und danach die Auswahl der zu vergleichenden Bilder getroffen werden.

So besteht ein typischer Missbrauch eines Datenträgers mit nicht übertragbarer Zugangsberechtigung, z. B. einer Tageskarte beim Wintersport darin, dass der Benutzer, der die Tageskarte frühmorgens gekauft hat, zunächst mit dem Lift, der Bergbahn oder dergleichen in höhere Regionen fährt, dort den Vormittag verbringt und gegen Mittag ins Tal abfährt, um dort die Karte z. B. am Parkplatz an einen anderen zu übergeben. Wenn ein solches Verhalten anhand der Datenbank festgestellt worden ist, kann mit der Kamera an der Zugangskontrollvorrichtung im Tal ein Bild von dem Benutzer aufgenommen, in der Datenbank abgespeichert und an den PC zur Sichtkontrolle übertragen werden. Wenn der Sichtvergleich am Bildschirm ergibt, dass das Bild des Benutzers, der die Tageskarte vormittags gekauft bzw. benutzt hat, nicht mit dem Bild des Benutzers übereinstimmt, der mittags vom Tal in höhere Regionen auffährt, ist ein Missbrauch des nicht übertragbaren Datenträgers festgestellt worden.

Die fehlende Übereinstimmung der Bilder der Benutzer ein-und desselben Datenträgers, die vom Bediener des Endgeräts, der den Sichtvergleich durchführt, festgestellt wird, wird z. B. der Datenbank mitgeteilt und damit dem betreffenden Datenträger der weitere Zugang zu den Liften und Bergbahnen verweigert. D.h., der betreffende Datenträger kann für den weiteren Zugang gesperrt werden oder es kann z. B. bei weiterer Benutzung ein Alarm ausgelöst werden. Die Sperrung kann dadurch erfolgen, dass der Zugangsberechtigungsleser bei dem betreffenden Datenträger keine gültige Zugangsberechtigung mehr lesen kann und damit beispielsweise die Drehsperre blockiert bleibt. Auch kann ein optischer und/oder akustischer Alarm ausgelöst werden, wenn der Zugangsberechtigungsleser den entsprechenden Datenträger liest, sodass das Kontrollpersonal an der Zugangskontrollvorrichtung dem Benutzer des Datenträgers den Zugang verweigern kann.

Ferner können statistische Verfahren verwendet werden, um aus den abgespeicherten Benutzerbildern bestimmte Bilder zum Sichtvergleich auszuwählen. So kann beispielsweise das AQL (Acceptable Quality Level)-Stichprobensystem, ein internationales Qualitätssicherungssystem zur Auswahl der Benutzerbilder herangezogen werden, welches bei einer Annahmen-Stichprobenprüfung die obere Grenze einer zufriedenstellenden mittleren Qualitätslage beschreibt.

Um die Datenmengen zu reduzieren, kann die Bildaufnahme mit der Kamera und/oder die Bildspeicherung vom Endgerät in der Datenbank von dem Selektionsprogramm gesteuert werden.

Auch ist ein Computerprogramm vorteilhaft, das den Kopf des Benutzers findet, ihn sozusagen ausschneidet und damit nur ein digitales Bild des Kopfes des Benutzers übertragen bzw. abgespeichert wird, um den Datensatz entsprechend zu reduzieren.

Von Vorteil ist ferner ein Computerprogramm, das die Farbzusammenstellung der Kleidung des Benutzers bestimmt, die zum Vergleich abgespeichert wird, wobei bei größeren Abweichungen der Farbzusammenstellung der Kleidung dem Datenträger der weitere Zugang verweigert wird, also ein automatischer Alarm oder eine automatische Sperrung ausgelöst wird.

Ferner kann ein Computerprogramm vorgesehen sein, mit dem biometrische Merkmale, wie die Gesichtsform, bestimmt werden, welche zum Vergleich abgespeichert werden, wobei bei größeren Abweichungen ein automatischer Alarm oder eine automatische Sperrung ausgelöst wird.

Die Kamera wird zur Aufnahme des Bildes des Benutzers beim Zugang durch das Lesen des Datenträgers mit dem Zugangsberechtigungsleser oder durch das Vorrücken des Benutzers ausgelöst, das durch Sensoren erfasst wird.

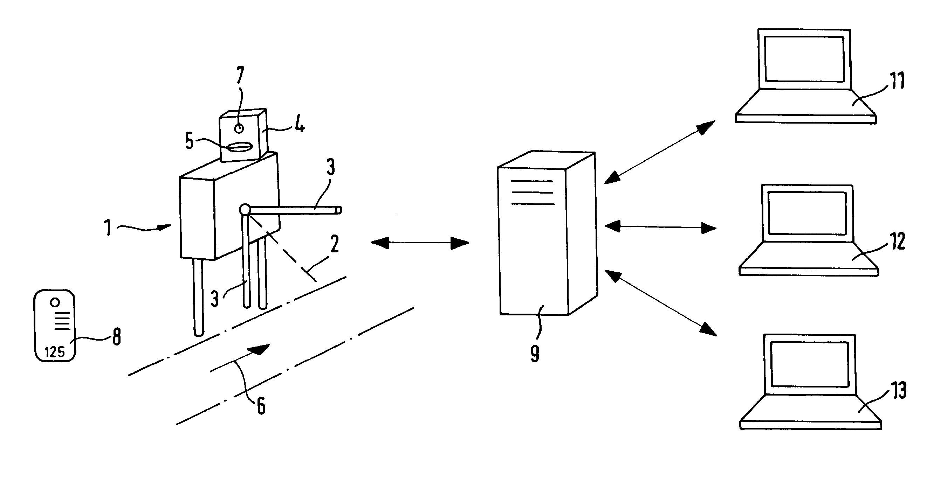

Nachstehend ist die Erfindung anhand der beigefügten Zeichnung beispielhaft näher erläutert, deren einzige Figur schematisch eine Ausführungsform des erfindungsgemäßen Systems zeigt.

Danach weist eine als Drehsperre ausgebildete Zugangskontrollvorrichtung 1 mit einem Drehkreuz mit zwei um eine Achse 2 drehbaren Sperrarmen 3 einen Zugangsberechtigungsleser in einem Gehäuse 4 auf. In das Kartenmaul 5 des Zugangsberechtigungslesers 4 wird ein als Karte ausgebildeter Datenträger 8 mit einer nicht übertragbaren Zugangsberechtigung gesteckt, beispielsweise mit einem Barcode. Bei gültiger Lesung der Zugangsberechtigung mit dem Zugangsberechtigungsleser 4 wird das Drehkreuz gedreht, sodass der Zugang 6 freigegeben wird.

Wenn der Datenträger 8 in das Kartenmaul 5 gesteckt wird, wird mit einer Kamera in dem Gehäuse 4, von der nur das Objektiv 7 zu sehen ist, ein Bild von dem Datenträgerbenutzer aufgenommen. Der Datenträger ist mit Identifikationsdaten z. B. "125" versehen. Diese Identifikationsdaten werden zusammen mit dem digitalisierten Bild, das mit der Kamera 7 von dem Kartenbenutzer aufgenommen worden ist, in einer Datenbank 9 abgespeichert.

Das abgespeicherte Bild des Benutzers ist zusammen mit den betreffenden Identifikationsdaten "125" des Datenträgers von der Datenbank 9 an Endgeräte, beispielsweise einen PC 11 bis 13 mit einem Bildschirm übertragbar. Damit ist ein Sichtvergleich zwischen dem Bild des Benutzers des betreffenden Datenträgers 8 mit einem zuvor aufgenommenem Bild des Benutzers desselben Datenträgers mit den PCs 11 bis 13 möglich. Wenn die Benutzerbilder des betreffenden Datenträgers 8 im Sichtvergleich nicht übereinstimmen, wird dies vom Bediener des PCs 11 bis 13 der Datenbank 9 oder einer anderen Kontrollstelle, z. B. über das Internet gemeldet und der Datenträger 8 für den weiteren Zugang gesperrt.

## Patentansprüche

1. System mit wenigstens einer Zugangskontrollvorrichtung (1) mit einem Zugangsberechtigungsleser (4) für Datenträger (8) mit einer Zugangsberechtigung und Identifikationsdaten und mit einer Datenbank (9), in der die Identifikationsdaten des betreffenden Datenträgers (8) abgespeichert werden, **gekennzeichnet durch** eine Kamera (7), mit der ein beim Zugang aufgenommenes digitalisiertes Bild des Benutzers des Datenträgers (8) zusammen mit den Identifikationsdaten des Datenträgers (8) in der Datenbank (9) abgespeichert wird und ein Endgerät (11 bis 13) mit einem Bildschirm, an das das abgespeicherte Bild des Benutzers des betreffenden Datenträgers (8) von der Datenbank zum Sichtvergleich mit einem zuvor aufgenommenen und abgespeicherten Bild übertragbar ist, wobei bei fehlender Übereinstimmung der Benutzerbilder dem betreffenden Datenträger (8) der weitere Zugang verweigert wird.

2. System nach Anspruch 1, **dadurch gekennzeichnet, dass** beim Zugang zusammen mit den Datenträger-Identifikationsdaten und dem Bild des Benutzers der Zugangszeitpunkt in der Datenbank (9) abgespeichert wird.

3. System nach Anspruch 1 oder 2 mit mehreren Zugangskontrollvorrichtungen, **dadurch gekennzeichnet, dass** bei gültiger Lesung einer Zugangsberechtigung an einer der Zugangskontrollvorrichtungen (1) zusammen mit den Identifikationsdaten des Datenträgers (8) die Daten zur Identifikation der jeweilgen Zugangskontrollvorrichtung (1) in der Datenbank (9) abgespeichert werden.

4. System nach einem der vorstehenden Ansprüche, **dadurch gekennzeichnet, dass** ein Selektionsprogramm bestimmte Datenträger für die Übertragung der Bilder von der Datenbank (9) an das Endgerät (11 bis 13) zum Sichtvergleich auswählt.

5. System nach Anspruch 4, **dadurch gekennzeichnet, dass** das Selektionsprogramm die Datenträger (8) nach ihrer Wertigkeit, aufgrund einer Verhaltensmuster-Analyse des Datenträger-Benutzers und/oder statistisch auswählt.

6. System nach Anspruch 5, **dadurch gekennzeichnet, dass** die Übertragung der Bilder mit den Identifikationsdaten des Datenträgers von der Datenbank (9) an das Endgerät (11 bis 13) über das Internet erfolgt.

7. System nach einem der Ansprüche 4 bis 6, **dadurch gekennzeichnet, dass** die Bildaufnahme mit der Kamera (7) und/oder die Bildspeicherung in der Datenbank von dem Selektionsprogramm gesteuert werden.

8. System nach Anspruch 1, **gekennzeichnet durch** ein Computerprogramm, **durch** das der Kopf des Benutzers gefunden und damit nur ein digitalisiertes Bild des Kopfes des Benutzers abgespeichert wird.

9. System nach Anspruch 1, **gekennzeichnet durch** ein Computerprogramm, das die Farbzusammenstellung der Kleidung des Benutzers bestimmt, die zum Vergleich abgespeichert wird, wobei bei Abweichungen der Farbzusammenstellung der Kleidung dem betreffenden Datenträger (8) der weitere Zugang verweigert wird.

10. System nach Anspruch 1, **gekennzeichnet durch** ein Computerprogramm, das biometrische Merkmale des Benutzers bestimmt, die zum Vergleich abgespeichert werden, wobei bei Abweichungen der biometrischen Merkmale dem betreffenden Datenträger (8) der weitere Zugang verweigert wird.

11. System nach Anspruch 10, **dadurch gekennzeichnet, dass** die biometrischen Merkmale die Gesichtsform des Benutzers betreffen.

12. System nach Anspruch 1, **dadurch gekennzeichnet, dass** die Kamera (7) zur Aufnahme des Bildes des Benutzers durch das Lesen des Datenträgers (8) mit dem Zugangsberechtigungsleser (4) und/oder durch das Vorrücken des Benutzers ausgelöst wird, das mit Sensoren erfasst wird.

## Geänderte Patentansprüche

### Geänderte Patentansprüche gemäss Regel 86(2) EPÜ.

**1.** System mit wenigstens einer Zugangskontrollvorrichtung (1) mit einem Zugangsberechtigungsleser (4) für Datenträger (8) mit einer Zugangsberechtigung und Identifikationsdaten und mit einer Datenbank (9), in der die Identifikationsdaten des betreffenden Datenträgers (8) abgespeichert werden, **gekennzeichnet durch** eine Kamera (7), mit der ein beim Zugang aufgenommenes digitalisiertes Bild des Benutzers des Datenträgers (8) zusammen mit den Identifikationsdaten des Datenträgers (8) in der Datenbank (9) abgespeichert wird und mindestens ein Endgerät (11 bis 13) mit einem Bildschirm, an das das abgespeicherte Bild des Benutzers des betreffenden Datenträgers (8) von der Datenbank zum Sichtvergleich mit einem zuvor aufgenommenen und abgespeicherten Bild übertragbar ist, wobei bei fehlender Übereinstimmung der Benutzerbilder dem Benutzer des betreffenden Datenträgers (8) der weitere Zugang verweigert wird.

**2.** System nach Anspruch 1, **dadurch gekennzeichnet, dass** beim Zugang zusammen mit den Datenträger-Identifikationsdaten und dem Bild des Benutzers der Zugangszeitpunkt in der Datenbank (9) abgespeichert wird.

**3.** System nach Anspruch 1 oder 2 mit mehreren Zugangskontrollvorrichtungen, **dadurch gekennzeichnet, dass** bei gültiger Lesung einer Zugangsberechtigung an einer der Zugangskontrollvorrichtungen (1) zusammen mit den Identifikationsdaten des Datenträgers (8) die Daten zur Identifikation der jeweiligen Zugangskontrollvorrichtung (1) in der Datenbank (9) abgespeichert werden.

**4.** System nach einem der vorstehenden Ansprüche, **dadurch gekennzeichnet, dass** ein Selektionsprogramm bestimmte Datenträger für die Übertragung der Bilder von der Datenbank (9) an das Endgerät (11 bis 13) zum Sichtvergleich auswählt.

**5.** System nach Anspruch 4, **dadurch gekennzeichnet, dass** das Selektionsprogramm die Datenträger (8) nach ihrer Wertigkeit, aufgrund einer Verhaltensmuster-Analyse des Datenträger-Benutzers und/oder statistisch auswählt.

**6.** System nach Anspruch 4 oder 5, **dadurch gekennzeichnet, dass** die Bildaufnahme mit der Kamera (7) und/oder die Bildspeicherung in der Datenbank von dem Selektionsprogramm gesteuert wird.

**7.** System nach Anspruch 1, **dadurch gekennzeichnet, dass** die Übertragung der Bilder mit den Identifikationsdaten des Datenträgers von der Datenbank (9) an das Endgerät (11 bis 13) über das Internet erfolgt.

**8.** System nach Anspruch 1, **gekennzeichnet durch** ein Computerprogramm, **durch** das der Kopf des Benutzers gefunden und damit nur ein digitalisiertes Bild des Kopfes des Benutzers abgespeichert wird.

**9.** System nach Anspruch 1, **gekennzeichnet durch** ein Computerprogramm, das die Farbzusammenstellung der Kleidung des Benutzers bestimmt, die zum Vergleich abgespeichert wird, wobei bei Abweichungen der Farbzusammenstellung der Kleidung dem Benutzer des betreffenden Datenträgers (8) der weitere Zugang verweigert wird.

**10.** System nach Anspruch 1, **dadurch gekennzeichnet, dass** die Kamera (7) zur Aufnahme des Bildes des Benutzers durch das Lesen des Datenträgers (8) mit dem Zugangsberechtigungsleser (4) und/oder durch das Vorrücken des Benutzers ausgelöst wird, das mit Sensoren erfasst wird.
